# EUROPEAN PATENT SPECIFICATION

(11) **EP 2 349 755 B1**
(45) Date of publication and mention of the grant of the patent: **26.11.2014**
(21) Application number: 09796427.4
(22) Date of filing: 16.09.2009
(51) Int. Cl.: F25B 45/00, B60H 3/00, B60H 1/00

(54) **A MAINTENANCE APPARATUS AND METHOD FOR AN AIR CONDITIONING SYSTEM OF A MOTOR VEHICLE**
WARTUNGSGERÄT UND VERFAHREN FÜR EINE KLIMAANLAGE EINES KRAFTFAHRZEUGES
APPAREIL ET PROCÉDÉ DE MAINTENANCE POUR UN SYSTÈME DE CLIMATISATION D'UN VÉHICULE

(30) Priority: 16.09.2008 IT PI20080094
(43) Date of publication of application: 03.08.2011
(73) Proprietor: Ecotechnics S.p.a., 50019 Sesto Fiorentino (IT)
(72) Inventor: RAHHALI, Sanhaji, I-50019 Sesto Fiorentino (IT)
(74) Representative: Celestino, Marco
(86) International application number: PCT/IB2009/006851
(87) International publication number: WO 2010/032107

(56) References cited:
- EP-A- 1 114 742
- DE-A1-102006 049 320
- US-A- 5 509 972

## Description

### Field of the invention

The present invention relates to a maintenance and hygiene method of an air conditioning system, for example of a motor vehicle.

Furthermore, the invention relates to a device that is adapted to carry out such method.

### Description of the technical problem

Air conditioning systems of cars often require maintenance by qualified operators, who have to retrieve defects, such as a cooling fluid lack or excess, an incorrect system setting, any faults of the compressor or of the capillary valve, as well as any faults of the instruments of the system.

To exploit at best the system capacity, it is necessary to check, for example, the level of the cooling fluid, which tends to decrease and to deteriorate due to the large number of working cycles and to natural evaporation. Furthermore, it is necessary to purge the fluid from contaminating substances that pile up within the system.

To overcome these problems a periodic emptying operation of the system is provided along with a recovering step of the cooling fluid, which has to be purified from oil, air and steam.

A further aspect concerning such systems concerns unpleasant smelly emissions that come from the air conditioning system after a prolonged use. In particular, the reasons of such emissions comprise an incorrect operation of the system, which may occur, for instance, in case of lack of cooling fluid, a presence of bacteria in the evaporator, a possible oxidation of the aluminium, which is the material of which the evaporator is normally made, as well as a presence of residues of other substances that are dispersed in the driver and passenger compartments, such as smoke residues.

For a full restoration of the air conditioning system, after a circuit diagnosis step, cleaning steps are provided comprising an air duct cleaning step and a subsequent hygiene step by means of a specific device which introduces hygiene products into the air ducts.

An apparatus that carries out such restoration cycle is described, for example, in EP1114742, which is considered as closest prior art.

In particular, the cleaning and hygiene steps are performed by devices that are independent from the diagnosis instruments. An apparatus that carries out a hygiene cycle of a generic air conditioning system, not specifically for motor vehicles, is described, for instance, in DE102006049320.

The use of such an apparatus requires, firstly, a large space to arrange a high number of instruments around a working position, a higher cost due to the need of different machines, and a remarkably longer operating time.

### Summary of the invention

It is therefore a general feature of the present invention to provide a motor vehicle air conditioning system maintenance method that reduces the operating time that is needed for controlling the system.

It is another feature of the present invention to provide an air conditioning system maintenance method that is fairly expensive and easy to actuate.

It is therefore a general feature of the present invention to provide a motor vehicle air conditioning system maintenance method that allows to reduce operative spaces in a motor vehicle workshop.

It is therefore general feature of the present invention to provide a motor vehicle air conditioning system maintenance method that allows an energy saving.

It is also a feature of the present invention to provide an air conditioning system maintenance apparatus that reaches the same objects.

These and other objects are achieved by a maintenance method for a motor vehicle air conditioning system, said motor vehicle having a driver and passenger compartments, an engine and an air circulation network, said air conditioning system comprising a cooling circuit in which a cooling fluid flows that cools an air flow that circulates in said network,
said method carried out by a maintenance apparatus, wherein said maintenance apparatus comprises:
- a regeneration device of said air conditioning system;
- a hygiene device that sanitises said air circulation network of said air conditioning system and of said driver and passenger compartments, and
- a program means that actuates and controls said regeneration device;
said method providing the steps of:
- performing by said program means a plurality of regeneration steps of said cooling circuit;
- performing by said program means a hygiene step that sanitises said air circulation network and said driver and passenger compartments, wherein said hygiene step is carried out contemporaneously with at least one of said regeneration steps.

In particular, said regeneration steps of said air conditioning system comprises the steps of:
- recovering said cooling fluid from said cooling circuit;
- discharging a lubricating fluid that is present in said cooling circuit;
- establishing vacuum conditions in said cooling circuit;
- treating said cooling fluid in such a way that contaminating impurities are eliminated and a regenerated cooling fluid is obtained;
- reintroducing a lubricating fluid into said cooling circuit;
- charging said regenerated cooling fluid into said cooling circuit,
wherein said hygiene step is carried out contemporaneously with said step of recovering said cooling fluid.

Preferably, said hygiene step is finished before the establishing vacuum condition step in said cooling circuit.

Advantageously, said hygiene step, which is carried out contemporaneously with said step of recovering said cooling fluid, and is prolonged up to said lubricating fluid discharging step/establishing vacuum condition step.

In particular, said hygiene step and said recovering step are carried out with said engine on. This way, the step of recovering the cooling fluid is easier, since the higher the temperature of the air conditioning system, the higher the pressure of the cooling fluid in the cooling circuit.

Preferably, said hygiene step and said recovering step are carried out with said air conditioning system turned off and with an air recirculation turned on in said driver and passenger compartments.

Advantageously, said hygiene method comprises the steps of:
- arranging an outlet end of a hygiene duct proximate to a suction mouth of said air circulation network,
- causing a hygiene substance to flow through said hygiene duct such that said substance sanitises said air circulating network and diffuses said hygiene substance in said driver and passenger compartments.

Advantageously, a further maintenance step is provided of purging the air that is present within said cooling circuit, said purging step carried out after said lubricating fluid discharging step.

According to another aspect of the invention, a maintenance apparatus of a motor vehicle air conditioning system is provided, said motor vehicle having a driver and passenger compartments, an engine and an air circulation network, said air conditioning system comprising a cooling circuit in which a cooling fluid flows that cools an air flow that circulates in said network,
wherein said maintenance apparatus comprises:
- a regeneration device of said air conditioning system;
- a program means that is adapted to actuate and to control said regeneration device by carrying out a plurality of regeneration steps of said cooling circuit;
**characterised in that**
said maintenance apparatus comprises furthermore
- a hygiene device that is suitable for sanitising said air circulation network of said air conditioning system and of said driver and passenger compartments,
and in that
said program means is adapted to operate said hygiene device that sanitises said air circulation network and said driver and passenger compartments, wherein said hygiene device acts contemporaneously with one of said regeneration steps.

In particular, said regeneration device comprises:
- a fluid-recovering means for recovering said cooling fluid from said cooling circuit;
- a discharging means for discharging a lubricating fluid that is present in said cooling circuit;

- a vacuum-establishing means for establishing vacuum conditions in said cooling circuit;
- a depurating means for depurating said cooling fluid in such a way that the contaminating impurities are eliminated and a regenerated cooling fluid is obtained;
- a fluid-introducing means for introducing lubricating fluid in said cooling circuit;
- a fluid-charging means for charging said regenerated cooling fluid in said cooling circuit,
said program means adapted to contemporaneously actuate and control said means for recovering said regeneration device and said hygiene device.

In particular, said program means is adapted to operate said hygiene device contemporaneously with said means for recovering said cooling fluid, in particular adapted to operate said hygiene device contemporaneously with said means for recovering said cooling fluid and with said means for discharging said lubricating fluid, and preferably adapted to switch off said hygiene device before or when said means for establishing vacuum conditions in said cooling circuit are actuated.

Advantageously, said hygiene device comprises:
- a hygiene duct that is adapted to be put in communication with a suction mouth of said air circulation network,
- a distribution means for distributing a hygiene substance in said hygiene duct, such that it sanitises said air circulating network and diffuses said hygiene substance in said driver and passenger compartments.

In particular, said program means comprises a microprocessor and a digital display that provides an interface with an operator. This way, the operator can manage and check the correct execution of the above described maintenance and hygiene steps as well as he/she can set the timing and the parameters of said apparatus.

### Brief description of the drawings

Further characteristic and advantages of the present invention will be made clearer with the following description of an exemplary embodiment thereof, exemplifying but not limitative, with reference to the attached drawings, throughout the figures in which:
- Fig. 1 shows a diagrammatical view of a motor vehicle air conditioning system which is connected to a maintenance and hygiene device, according to the invention;
- Fig. 2 shows an inner view of the driver and passenger compartments of the car of Fig. 1, where a sanitised air flow is shown which flows through the air circulating network;
- Fig. 3 shows a block diagram that describes the operation of the regeneration device and of the hygiene device;
- Fig. 4 shows a time diagram that highlights the contemporaneity of the regeneration steps and of the hygiene steps, according to the invention.

### Description of a preferred embodiment

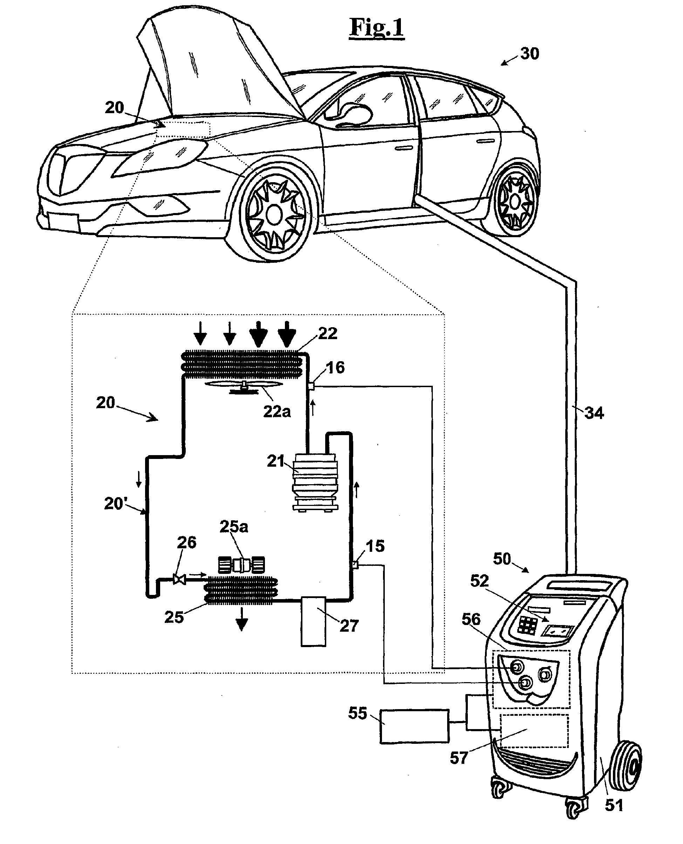

With reference to Fig. 1, a maintenance and hygiene apparatus 50 is shown, according to the invention, in use with an air conditioning system 20 of a motor vehicle 30. In particular, air conditioning system 20, as well known, comprises a cooling circuit 20' that is equipped with a compressor 21, a hot exchanger or condenser 22, with a respective fan 22a, an expansion valve 26 and an evaporator or cold exchanger 25, with a respective fan 25a.

Furthermore, circuit 20' provides a receiver of a liquid 27 to compensate the presence of the fluid in liquid state at the outlet of evaporator 25.

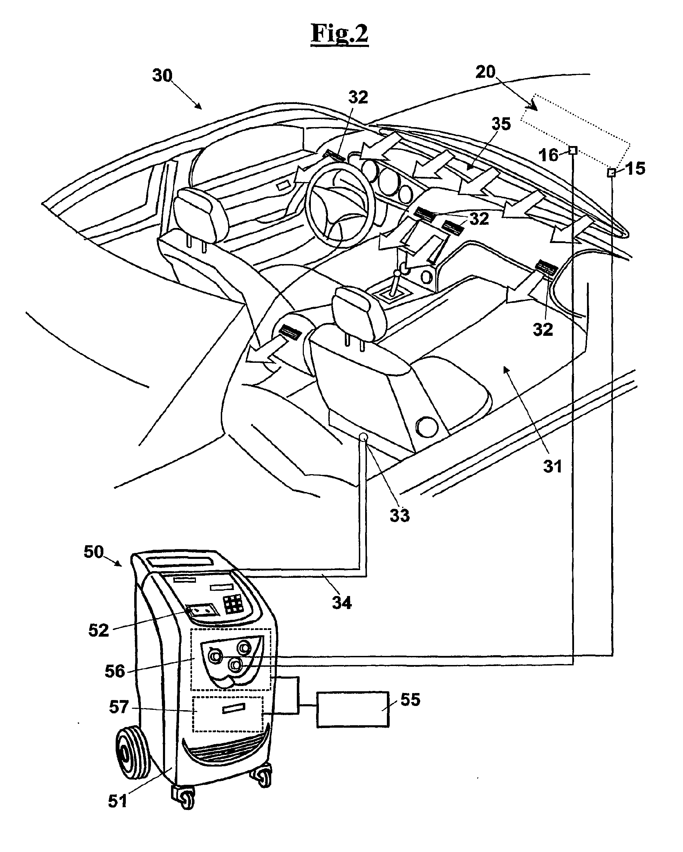

In particular, maintenance and hygiene apparatus 50, which is shown diagrammatically in Figs. 1 and 2, integrates in a single box-like body 51 a regeneration device 56 of the air conditioning system, and a hygiene device 57. In detail, hygiene device 57 is effective in an air circulating network 35 of the system as well as in the driver and passenger compartments 31 of a motor vehicle 30. In particular, regeneration device 56 has an operating scheme as described in EP1367343 and in EP0969907, and provides a means for recovering the cooling fluid from cooling circuit 20, and a means for discharging the lubricating fluid. In addition, it comprises a pump that is adapted to create vacuum conditions inside cooling circuit 20', and a cooling fluid depurating device, which exploits the evaporation of the same fluid and its subsequent condensation, in such a way that the contaminating impurities are eliminated and a regenerated cooling fluid is obtained.

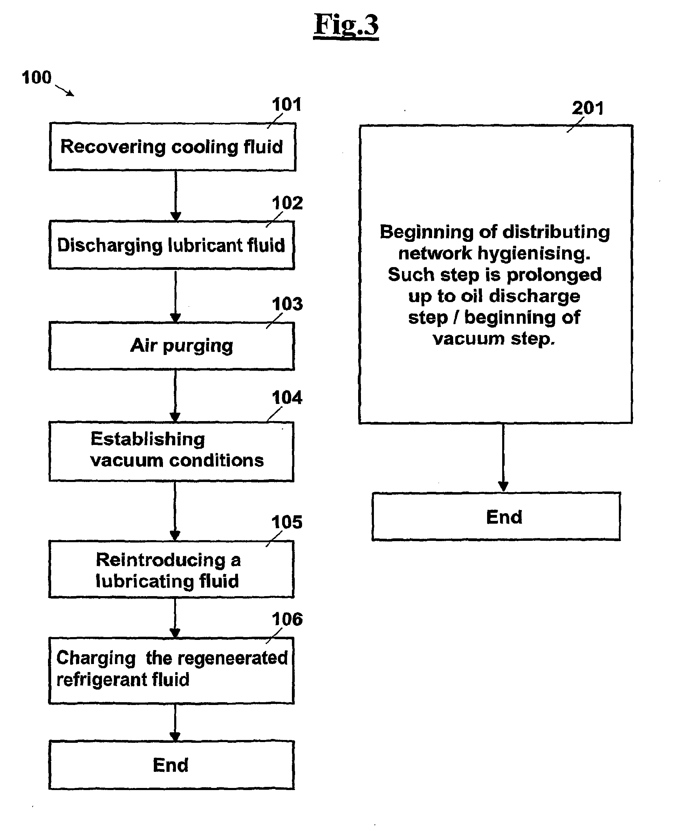

The novel feature of the apparatus, according to the invention, is that regeneration device 56 and hygiene device 57 are contemporaneously operated through a program means 55, as diagrammatically shown in the block diagram of Fig. 3. In particular, program means 55 is adapted to actuate hygiene device 57 contemporaneously with the means for recovering the cooling fluid; more in particular, program means 55 is suitable for actuating hygiene device 57 contemporaneously with the means for recovering the cooling fluid and with the means for discharging the lubricating fluid. More in detail, program means 55 is adapted to switch off hygiene device 57 before or when the means for establishing vacuum conditions in cooling circuit 20 is actuated

Therefore, with reference to the maintenance and controlling procedure of the air conditioning system, pressure sensors, which are present in apparatus 50, are connected to cooling circuit 20' by means of quick joint 15 and 16. In addition, a hygiene duct 34 is connected which engages with a suction mouth 33 that communicates with an air circulating network 35 (Fig. 2).

Subsequently, an operator starts the maintenance and hygiene program that is resident in the memory of microprocessor 55. In particular, by means of a digital display of interface 52 and of a control panel the operator can manage and check the correct execution of the maintenance and hygiene procedure that are respectively performed by devices 56 and 57; furthermore, the operator can set time and parameters of apparatus 50.

As shown in Fig. 2, air circulating network 35 for generating the air flow provides a plurality of mouths 32 that are arranged inside the driver and passenger compartments 31 of vehicle 30, through which conditioned air is diffused and through which a hygiene substance is introduced, during the operation of hygiene device 57, which eliminates unpleasant smells that arise after a certain working time of air conditioning system 20'.

With reference to Fig. 3, a block diagram is shown that represents the working cycle of apparatus 50, which is actuated and controlled by inner microprocessor 55. In particular, the diagram is split into a plurality of regeneration steps 100 of the operation of cooling system 20 and by a hygiene step 201 that sanitises air circulating network 35 of the air conditioning system and diffuses said hygiene substance in the driver and passenger compartments 31.

In particular, regeneration steps 100 comprise in turn steps wherein a block 101 represents the step of recovering the cooling fluid from cooling circuit 20', a block 102 represents the lubricating fluid discharging step, such as oil, which is present in cooling circuit 20'. A following block 103 represents the step of air purge from circuit 20', which is followed by a step 104 of establishing vacuum conditions inside cooling circuit 20'. A step is also carried out, not shown, which concerns treatment of the cooling fluid such that contaminating impurities are eliminated and a regenerated cooling fluid is obtained. Finally, steps 105 are provided of reintroducing a lubricating fluid into cooling circuit 20' and a step 106 of charging the regenerated cooling fluid into cooling circuit 20'. In particular, hygiene steps 201 and recovering step 101 are performed with the engine of motor vehicle 30 on, such that the step of recovering the cooling fluid is facilitated, since the higher the temperature of the air conditioning system, the higher the pressure of the cooling fluid in the cooling circuit 20. Furthermore, and still advantageously, hygiene step 201 and recovering step 101 are carried out with the air conditioning system turned off and with an air recirculation turned on in driver and passenger compartments 31.

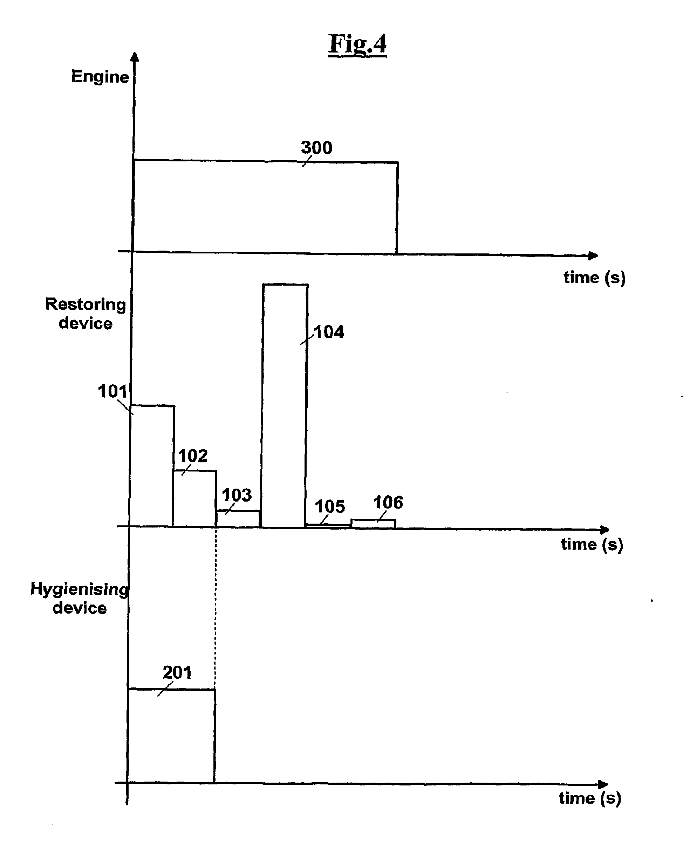

As shown in the time diagram of Fig. 4, hygiene step 201 is carried out contemporaneously with recovering step 101 of the cooling fluid during an operation 300 of the engine. In fact, if the engine is kept on at a substantially fixed RPM, recovering steps 101 and hygiene step 201 are started at the same time. The latter has a duration time that lasts beyond the step of recovering the cooling fluid and includes, furthermore, step 102 of discharging the lubricating fluid/ the establishing vacuum condition steps 103,104. This way, a high advantage is obtained in terms of cycle time and cost reduction, since the recovering and hygiene operations are carried out contemporaneously, and, furthermore, less space is needed than that is required by two distinct devices, as in the case of prior art methods.

The foregoing description of a specific embodiment will so fully reveal the invention according to the conceptual point of view, so that others, by applying current knowledge, will be able to modify and/or adapt for various applications such an embodiment without further research and without parting from the invention as defined in the appended claims, and it is therefore to be understood that such adaptations and modifications will have to be considered as equivalent to the specific embodiment. The means and the materials to realise the different functions described herein could have a different nature without for this reason, departing from the invention as defined in the appended claims. It is to be understood that the phraseology or terminology employed herein is for the purpose of description and not of limitation.

## Claims

1. A maintenance method for a motor vehicle air conditioning system (20), said motor vehicle (30) having a driver and passenger compartments (31), an engine and an air circulation network (35), said air conditioning system (20) comprising a cooling circuit (20') where a cooling fluid flows that cools an air flow that circulates in said network (35),
said method carried out by a maintenance apparatus, wherein said maintenance apparatus comprises:
- a regeneration device (56) of said air conditioning system (20) ;
- a hygiene device (57) that sanitises said air circulation network (35) of said air conditioning system (20) and of said driver and passenger compartments (31), and
- a program means (55) that actuates and controls said regeneration device (56);
said method providing the steps of:
- performing by said program means (55) a plurality of regeneration steps (100) of said cooling circuit (20');
- performing by said program means (55) a hygiene step (201) that sanitises said air circulation network (35) and said driver and passenger compartments (31), wherein said hygiene step (201) is carried out contemporaneously with at least one of said regeneration steps (100); and
- wherein said program means (55) adapted to operate said hygiene device (57) contemporaneously with said means for recovering said cooling fluid, such that cycle time and costs savings are achieved.

2. A maintenance method, according to claim 1, wherein said regeneration steps (100) of said air conditioning system (20) comprises the steps of:
- recovering said cooling fluid from said cooling circuit (20');
- discharging a lubricating fluid that is present in said cooling circuit (20');
- establishing vacuum conditions in said cooling circuit (20') ;
- treating said cooling fluid in such a way that contaminating impurities are eliminated and a regenerated cooling fluid is obtained;
- reintroducing a lubricating fluid into said cooling circuit (20');
- charging said regenerated cooling fluid into said cooling circuit (20'),
wherein said hygiene step (201) is carried out contemporaneously with said step of recovering said cooling fluid.

3. A maintenance method, according to claim 2, wherein said hygiene step (201) is finished before or in coincidence of the establishing vacuum condition step in said cooling circuit (20').

4. A maintenance method, according to claim 2, wherein said hygiene step (201), which is carried out contemporaneously with said step of recovering (101) said cooling fluid, is prolonged up to said step of discharging said lubricating fluid/establishing vacuum condition step.

5. A maintenance method, according to claim 2, wherein said hygiene step (201) and said recovering step (101) are carried out with said engine on.

6. A maintenance method, according to claim 2, wherein said hygiene step (201) and said recovering step (101) are carried out with said air conditioning system (20) turned off and with an air recirculation turned on in said driver and passenger compartments (31).

7. A maintenance method, according to claim 1, wherein said hygiene method comprises the steps of:
- arranging an outlet end of a hygiene duct (34) proximate to a suction mouth (33) of said air circulation network (35),
- causing a hygiene substance to flow through said hygiene duct (34) such that said substance sanitises said air circulating network (35) and diffuses said hygiene substance in said driver and passenger compartments (31).

8. A maintenance apparatus of a motor vehicle air conditioning system (20), said motor vehicle (30) having a driver and passenger compartments (31), an engine and an air circulation network (35), said air conditioning system (20) comprising a cooling circuit (20') in which a cooling fluid flows that cools an air flow that circulates in said network (35),
wherein said maintenance apparatus comprises:
- a regeneration device (56) of said air conditioning system (20);
- a program means (55) that is adapted to actuate and to control said regeneration device (56) by carrying out a plurality of regeneration steps (100) of said cooling circuit (20');
**characterised in that**
said maintenance apparatus comprises furthermore
- a hygiene device (57) that is suitable for sanitising said air circulation network (35) of said air conditioning system (20) and of said driver and passenger compartments (31),
and **in that**
said program means (55) is adapted to operate said hygiene device (57) that sanitises said air circulation network (35) and said driver and passenger compartments (31), wherein said hygiene device (57) acts contemporaneously with one of said regeneration steps (100),
wherein said program means (55) is adapted to operate said hygiene device (57) contemporaneously with said means for recovering said cooling fluid, such that cycle time and costs savings are achieved.

9. A maintenance apparatus, according to claim 8, wherein said regeneration device (56) comprises:
- a fluid-recovering means for recovering said cooling fluid from said cooling circuit (20');
- a discharging means for discharging a lubricating fluid that is present in said cooling circuit (20');
- a vacuum-establishing means for establishing vacuum conditions in said cooling circuit (20');
- a depurating means for depurating said cooling fluid in such a way that the contaminating impurities are eliminated and a regenerated cooling fluid is obtained;
- a fluid-introducing means for introducing a new lubricating fluid into said cooling circuit (20');
- a fluid-charging means for charging said regenerated cooling fluid into said cooling circuit (20') ;
wherein said program means (55) is adapted to contemporaneously actuate and control said means for recovering said regeneration device (56) and said hygiene device (57).

10. A maintenance apparatus, according to claim 8, wherein said program means (55) is adapted to operate said hygiene device (57) contemporaneously with said means for recovering said cooling fluid and with said means for discharging said lubricating fluid, and preferably adapted to switch off said hygiene device (57) before or when said means for establishing vacuum conditions in said cooling circuit (20') are actuated.

11. A maintenance apparatus, according to claim 8, wherein said hygiene device (57) comprises:
- a hygiene duct (34) that is adapted to be put in communication with a suction mouth (33) of said air circulation network (35),
- a distribution means for distributing a hygiene substance in said hygiene duct (34), such that it sanitises said air circulating network (35) and diffuses said hygiene substance in said driver and passenger compartments (31).

12. A maintenance apparatus, according to claim 8, wherein said program means (55) comprises a microprocessor and a digital display that provides an interface (52) with an operator, such that said operator can manage and check the correct execution of the above described maintenance and hygiene steps (201) as well as he/she can set the timing and the parameters of said apparatus.

## Patentansprüche

1. Wartungsverfahren für eine Klimaanlage (20) eines Kraftfahrzeugs, wobei das Kraftfahrzeug (30) Fahrer- und Fahrgasträume (31) aufweist, einen Motor und ein Luftzirkulationsnetz (35), wobei die Klimaanlage (20) einen Kühlkreislauf (20') umfasst, in dem ein Kühlfluid fließt, das einen in dem Netz (35) zirkulierenden Luftstrom kühlt,
wobei das Verfahren durch ein Wartungsgerät ausgeführt wird, wobei das Wartungsgerät folgendes umfasst:
- eine Aufbereitungsvorrichtung (56) der Klimaanlage (20);
- eine Hygienevorrichtung (57), welche das Luftzirkulationsnetz (35) der Klimaanlage (20) und der Fahrer- und Fahrgasträume (31) desinfiziert; und
- eine Programmeinrichtung (55), welche die Aufbereitungsvorrichtung (56) in Gang setzt und steuert;
wobei das Verfahren die folgenden Schritte umfasst:
- Ausführen einer Mehrzahl von Aufbereitungsschritten (100) des Kühlkreislaufs (20') durch die Programmeinrichtung (55);
- Ausführen eines Hygieneschritts (201) durch die Programmeinrichtung (55), der das Luftzirkulationsnetz (35) und die Fahrer- und Fahrgasträume (31) desinfiziert, wobei der Hygieneschritt (201) gleichzeitig zu wenigstens einem der Aufbereitungsschritte (100) ausgeführt wird; und
- wobei die Programmeinrichtung (55) die Hygienevorrichtung (57) gleichzeitig mit der Einrichtung zur Rückgewinnung des Kühlfluids betrieben werden kann, so dass Zykluszeit und Kosten eingespart werden.

2. Wartungsverfahren nach Anspruch 1, wobei die Aufbereitungsschritte (100) der Klimaanlage (20) die folgenden Schritte umfassen:
- Rückgewinnen des Kühlfluids aus dem Kühlkreislauf (20');
- Ausstoßen eines Schmierfluids, das sich in dem Kühlkreislauf (20') befindet;
- Erzeugen von Vakuumbedingungen in dem Kühlkreislauf (20');
- Behandeln des Kühlfluids in einer Weise, so dass kontaminierende Verunreinigungen eliminiert werden und ein aufbereitetes Kühlfluid erhalten wird;
- Wiedereinführen eines Schmierfluids in den Kühlkreislauf (20');
- Laden des aufbereiteten Kühlfluids in den Kühlkreislauf (20'),
wobei der Hygieneschritt (201) gleichzeitig zu dem Schritt des Aufbereitens des Kühlfluids ausgeführt wird.

3. Wartungsverfahren nach Anspruch 2, wobei der Hygieneschritt (201) abgeschlossen ist bevor oder gleichzeitig zu dem Schritt des Erzeugens von Vakuumbedingungen in dem Kühlkreislauf (20').

4. Wartungsverfahren nach Anspruch 2, wobei der Hygieneschritt (201), der gleichzeitig zu dem Schritt des Aufbereitens (101) des Kühlfluids ausgeführt wird, bis zu dem Schritt des Ausstoßens des Schmierfluids/dem Schritt des Erzeugens von Vakuumbedingungen verlängert wird.

5. Wartungsverfahren nach Anspruch 2, wobei der Hygieneschritt (201) und der Aufbereitungsschritt (101) bei eingeschaltetem Motor ausgeführt werden.

6. Wartungsverfahren nach Anspruch 2, wobei der Hygieneschritt (201) und der Aufbereitungsschritt (101) bei ausgeschalteter Klimaanlage (20) und in den Fahrer- und Fahrgasträumen (31) eingeschalteter Luftzirkulation ausgeführt werden.

7. Wartungsverfahren nach Anspruch 1, wobei das Hygieneverfahren die folgenden Schritte umfasst:
- Anordnen eines Auslassendes einer Hygieneleitung (34) proximal zu einer Ansaugmündung (33) des Luftzirkulationsnetzes (35);
- Bewirken einer Strömung einer Hygienesubstanz durch die Hygieneleitung (34), so dass die Substanz das Luftzirkulationsnetz (35) desinfiziert und die Hygienesubstanz in den Fahrer- und Fahrgasträumen (31) verteilt.

8. Wartungsgerät einer Klimaanlage (20) eines Kraftfahrzeugs, wobei das Kraftfahrzeug (30) Fahrer- und Fahrgasträume (31) aufweist, einen Motor und ein Luftzirkulationsnetz (35), wobei die Klimaanlage (20) einen Kühlkreislauf (20') umfasst, in dem ein Kühlfluid fließt, das einen in dem Netz (35) zirkulierenden Luftstrom kühlt,
wobei das Wartungsgerät folgendes umfasst:
- eine Aufbereitungsvorrichtung (56) der Klimaanlage (20);
- eine Programmeinrichtung (55), welche die Aufbereitungsvorrichtung (56) in Gang setzen und steuern kann, indem sie eine Mehrzahl von Aufbereitungsschritten (100) des Kühlkreislaufs (20') ausführt:
**dadurch gekennzeichnet, dass**
das Wartungsgerät ferner folgendes umfasst:
- eine Hygienevorrichtung (57), welche das Luftzirkulationsnetz (35) der Klimaanlage (20) und der Fahrer- und Fahrgasträume (31) desinfizieren kann; und wobei
die Programmeinrichtung (55) die Hygienevorrichtung (57), welche das Luftzirkulationsnetz (35) und die Fahrer- und Fahrgasträume (31) desinfiziert, betreiben kann, wobei die Hygienevorrichtung (57) gleichzeitig zu einem der Aufbereitungsschritte (100) arbeitet;
wobei die Programmeinrichtung (55) die Hygienevorrichtung (57) gleichzeitig zu einer Einrichtung zur Rückgewinnung des Kühlfluids betreiben kann, so dass Zykluszeit und Kosten eingespart werden.

9. Wartungsgerät nach Anspruch 8, wobei die Aufbereitungsvorrichtung (56) folgendes umfasst:
- eine Fluidrückgewinnungseinrichtung zur Rückgewinnung des Kühlfluids aus dem Kühlkreislauf (20');
- eine Ausstoßeinrichtung zum Ausstoßen eines Schmierfluids, das sich in dem Kühlkreislauf (20') befindet;
- eine Vakuumerzeugungseinrichtung zum Erzeugen von Vakuumbedingungen in dem Kühlkreislauf (20');
- eine Reinigungseinrichtung zum Reinigen des Kühlfluids auf eine Weise, so dass kontaminierende Verunreinigungen eliminiert werden und ein aufbereitetes Kühlfluid erhalten wird;
- eine Fluideinführungseinrichtung zum Einführen eines neuen Schmierfluids in den Kühlkreislauf (20');
- eine Fluidladeeinrichtung zum Laden des aufbereiteten Kühlfluids in den Kühlkreislauf (20');
wobei die Programmeinrichtung (55) die Einrichtung zur Rückgewinnung, die Aufbereitungsvorrichtung (56) und die Hygienevorrichtung (57) gleichzeitig betätigen und steuern kann.

10. Wartungsgerät nach Anspruch 8, wobei die Programmeinrichtung (55) die Hygienevorrichtung (57) gleichzeitig zu der Einrichtung zur Rückgewinnung des Kühlfluids und der Einrichtung zum Ausstoßen des Schmierfluids betreiben kann, und wobei sie vorzugsweise die Hygienevorrichtung (57) abschalten kann, bevor oder wenn, die Einrichtungen zum Erzeugen von Vakuumbedingungen in dem Kühlkreislauf (20') bestätigt werden.

11. Wartungsgerät nach Anspruch 8, wobei die Hygienevorrichtung (57) folgendes umfasst:
- eine Hygieneleitung (34), die in Kommunikation mit einer Ansaugmündung (33) des Luftzirkulationsnetzes (35) gebracht werden kann;
- eine Verteilungseinrichtung zum Verteilen einer Hygienesubstanz in der Hygieneleitung (34), so dass diese das Luftzirkulationsnetz (35) desinfiziert und die Hygienesubstanz in den Fahrer- und Fahrgasträumen (31) verkeilt.

12. Warkungsgerät nach Anspruch 8, wobei die Programmeinrichtung (55) einen Mikroprozessor und eine digitale Anzeige umfasst, die eine Schnittstelle (52) mit einer Bedienungsperson bereitstellt, so dass die Bedienungsperson die ordnungsgemäße Ausführung der vorstehend beschriebenen Wartungs- und Hygieneschritte (201) verwalten und überprüfen sowie die Zeitsteuerung und Parameter des Geräts festlegen kann.

## Revendications

1. Procédé de maintenance d'un système de climatisation (20) de véhicule à moteur, ledit véhicule à moteur (30) ayant des compartiments conducteur et passager (31), un moteur et un réseau de circulation d'air (35), ledit système de climatisation (20) comprenant un circuit de refroidissement (20') dans lequel s'écoule un fluide réfrigérant qui refroidit un flux d'air qui circule dans ledit réseau (35),
ledit procédé étant réalisé par un appareil de maintenance,
dans lequel ledit appareil de maintenance comprend :
un dispositif de régénération (56) dudit système de climatisation (20) ;
un dispositif d'hygiène (57) qui désinfecte ledit réseau de circulation d'air (35) dudit système de climatisation (20) et desdits compartiments conducteur et passager (31), et
un moyen programme (55) qui actionne et commande ledit dispositif de régénération (56) ;
ledit procédé comprenant les étapes consistant à :
effectuer par ledit moyen programme (55) une pluralité d'étapes de régénération (100) dudit circuit de refroidissement (20') ;
effectuer par ledit moyen programme (55) une étape d'hygiène (201) qui désinfecte ledit réseau de circulation d'air (35) et lesdits compartiments conducteur et passager (31), dans lequel ladite étape d'hygiène (201) est effectuée simultanément avec au moins l'une desdites étapes de régénération (100) ; et
dans lequel ledit moyen programme (55) est conçu pour actionner ledit dispositif d'hygiène (57) simultanément avec ledit moyen pour récupérer ledit fluide de refroidissement, de sorte à réaliser des économies de temps de cycle et d'argent.

2. Procédé de maintenance, selon la revendication 1, dans lequel lesdites étapes de régénération (100) dudit système de climatisation (20) comprennent les étapes consistant à :
récupérer ledit fluide de refroidissement dudit circuit de refroidissement (20') ;
décharger un fluide de lubrification qui est présent dans ledit circuit de refroidissement (20') ;
établir des conditions de vide dans ledit circuit de refroidissement (20') ;
traiter ledit fluide de refroidissement de sorte que les impuretés contaminantes soient éliminées et un fluide de refroidissement régénéré obtenu ;
réintroduire un fluide de lubrification dans ledit circuit de refroidissement (20') ;
charger ledit fluide de refroidissement régénéré dans ledit circuit de refroidissement (20'),
dans lequel ladite étape d'hygiène (201) est effectuée simultanément avec ladite étape de récupération dudit fluide de refroidissement.

3. Procédé de maintenance, selon la revendication 2, dans lequel ladite étape d'hygiène (201) est terminée avant ou en même temps que l'étape d'établissement de conditions de vide dans ledit circuit de refroidissement (20').

4. Procédé de maintenance, selon la revendication 2, dans lequel ladite étape d'hygiène (201), qui est réalisée simultanément avec ladite étape de récupération (101) dudit fluide de refroidissement, se prolonge jusqu'à ladite étape de déchargement dudit fluide de lubrification/étape d'établissement de condition de vide.

5. Procédé de maintenance, selon la revendication 2, dans lequel ladite étape d'hygiène (201) et ladite étape de récupération (101) sont réalisées avec ledit moteur allumé.

6. Procédé de maintenance, selon la revendication 2, dans lequel ladite étape d'hygiène (201) et ladite étape de récupération (101) sont réalisées avec ledit système de climatisation (20) éteint et avec la recirculation d'air activée dans lesdits compartiments conducteur et passager (31).

7. Procédé de maintenance, selon la revendication 1, dans lequel ledit procédé d'hygiène comprend les étapes consistant à :
placer une extrémité de sortie d'un conduit d'hygiène (34) à proximité d'une bouche d'aspiration (33) dudit réseau de circulation d'air (35),
amener une substance d'hygiène à s'écouler à travers ledit conduit d'hygiène (34) de sorte que ladite substance désinfecte ledit réseau de circulation d'air (35) et ladite substance d'hygiène soit diffusée dans lesdits compartiments conducteur et passager (31).

8. Appareil de maintenance d'un système de climatisation (20) de véhicule à moteur, ledit véhicule à moteur (30) ayant des compartiments conducteur et passager (31), un moteur et un réseau de circulation d'air (35), ledit système de climatisation (20) comprenant un circuit de refroidissement (20') dans lequel s'écoule un fluide réfrigérant qui refroidit un flux d'air qui circule dans ledit réseau (35),
dans lequel ledit appareil de maintenance comprend :
un dispositif de régénération (56) dudit système de climatisation (20) ;
un moyen programme (55) qui est conçu pour actionner et commander ledit dispositif de régénération (56) en effectuant une pluralité d'étapes de régénération (100) dudit circuit de refroidissement (20') ;
**caractérisé en ce que**
ledit appareil de maintenance comprend en outre
un dispositif d'hygiène (57) qui est conçu pour désinfecter ledit réseau de circulation d'air (35) dudit système de climatisation (20) et desdits compartiments conducteur et passager (31),
et **en ce que**
ledit moyen programme (55) est conçu pour actionner ledit dispositif d'hygiène (57) qui désinfecte ledit réseau de circulation d'air (35) et lesdits compartiments conducteur et passager (31), dans lequel ledit dispositif d'hygiène (57) agit simultanément avec l'une desdites étapes de régénération (100),
dans lequel ledit moyen programme (55) est conçu pour actionner ledit dispositif d'hygiène (57) simultanément avec ledit moyen pour récupérer ledit fluide de refroidissement, de sorte à réaliser des économies de temps de cycle et d'argent.

9. Appareil de maintenance selon la revendication 8, dans lequel ledit dispositif de régénération (56) comprend :
un moyen de récupération de fluide pour récupérer ledit fluide de refroidissement à partir dudit circuit de refroidissement (20') ;
un moyen de décharge pour décharger un fluide de lubrification qui est présent dans ledit circuit de refroidissement (20') ;
un moyen d'établissement de vide pour établir des conditions de vide dans ledit circuit de refroidissement (20') ;
un moyen de dépuration pour dépurer ledit fluide de refroidissement de sorte que les impuretés contaminantes soient éliminées et un fluide de refroidissement régénéré obtenu ;
un moyen d'introduction de fluide pour introduire un nouveau fluide de lubrification dans ledit circuit de refroidissement (20') ;
un moyen de charge de fluide pour charger ledit fluide de refroidissement régénéré dans ledit circuit de refroidissement (20') ;
dans lequel ledit moyen programme (55) est conçu pour actionner et commander simultanément ledit moyen pour récupérer ledit dispositif de régénération (56) et ledit dispositif d'hygiène (57).

10. Appareil de maintenance selon la revendication 8, dans lequel ledit moyen programme (55) est conçu pour actionner ledit dispositif d'hygiène (57) simultanément avec ledit moyen pour récupérer ledit fluide de refroidissement et avec ledit moyen pour évacuer ledit fluide de lubrification, et de préférence conçu pour mettre hors tension ledit dispositif d'hygiène (57) avant ou lorsque ledit moyen d'établissement de conditions de vide dans ledit circuit de refroidissement (20') est actionné.

11. Appareil de maintenance selon la revendication 8, dans lequel ledit dispositif d'hygiène (57) comprend :
un conduit d'hygiène (34) qui est conçu pour être mis en communication avec une bouche d'aspiration (33) dudit réseau de circulation d'air (35),
un moyen de distribution pour distribuer une substance d'hygiène dans ledit conduit d'hygiène (34), de sorte qu'elle désinfecte ledit réseau de circulation d'air (35) et que ladite substance d'hygiène soit diffusée dans lesdits compartiments conducteur et passager (31).

12. Appareil de maintenance selon la revendication 8, dans lequel ledit moyen programme (55) comprend un microprocesseur et un affichage numérique qui fournit une interface (52) avec un opérateur, de sorte que ledit opérateur puisse gérer et vérifier l'exécution correcte des étapes de maintenance et d'hygiène (201) décrites ci-dessus et définir le calendrier et les paramètres dudit appareil.
